# DEMANDE DE BREVET EUROPEEN

(11) **EP 3 296 712 A1**
(43) Date de publication de la demande: **21.03.2018**
(21) Numéro de dépôt: 17200318.8
(22) Date de dépôt: 21.01.2011
(51) Int. Cl.: G01L 1/12, G01M 5/00, G01N 27/72

(54) **PROCÉDÉ DE DÉTECTION DE LA CONTRAINTE MÉCANIQUE SUBIE PAR UNE PIÈCE EN UN MATÉRIAU MAGNÉTOSTRICTIF**

(30) Priorité: 22.01.2010 FR 1050440
(62) Demande divisionnaire de: 11705025.2
(71) Demandeur: Institut Polytechnique de Grenoble, 38000 Grenoble (FR)
(72) Inventeur: ROUVE, Laure-Line, 38570 THEYS (FR); VIANA, Antoine, 38320 HERBEYS (FR)
(74) Mandataire: Thibon, Laurent

(57) **Abrégé**

L'invention concerne un procédé de détection de la contrainte subie par une pièce en un matériau magnétique présentant une magnétostriction détectable, tel qu'un matériau ferromagnétique, comprenant les étapes suivantes :
(a) appliquer une contrainte variable à la pièce (32) ;
(b) réaliser une mesure du champ magnétique (B) au voisinage de la pièce (32) pendant l'application de la contrainte variable à la pièce ; et
(c) comparer (34) la mesure à une mesure de référence.

## Description

### Domaine de l'invention

La présente invention concerne un procédé de détection de la contrainte mécanique subie par une pièce en un matériau magnétique présentant des propriétés de magnétostriction observables et détectables. Plus particulièrement, la présente invention concerne des procédés permettant de connaître, a posteriori ou en temps réel, la contrainte subie par une telle pièce.

### Exposé de l'art antérieur

Pour déterminer si une pièce a subi une contrainte importante lors de son utilisation, un procédé connu consiste à analyser la structure de cette pièce par diffusion de rayons X ou en utilisant des ultrasons. Ces techniques permettent de visualiser des lignes de fracture dans le matériau. Cependant, elles ne permettent pas de déterminer la contrainte maximale à laquelle le matériau a été soumis, ou de détecter un dépassement de la contrainte maximale prédéfinie que le matériau peut supporter.

Le brevet US 5 012 189 propose un procédé permettant de calculer la contrainte qu'un matériau magnétique est en train de subir. Cependant, ce procédé est délicat à mettre en oeuvre. Il implique la mesure de la courbe anhystérétique du matériau non contraint (courbe de référence) et celle du matériau sous contrainte. L'écart entre ces deux courbes permet de remonter à la valeur de la contrainte actuellement subie par le matériau. La détermination d'une courbe anhystérétique peut être effectuée expérimentalement de la manière suivante : l'opérateur fixe un champ extérieur ; à l'aide d'un système générateur de champ alternatif, il soumet le matériau à un champ magnétique alternatif H dont l'amplitude décroît d'une valeur élevée jusqu'à zéro ; lorsque le champ alternatif a atteint 0, l'opérateur réitère cette opération pour un champ extérieur plus grand ; en procédant de cette manière pour un champ extérieur variant de 0 à Hsat, Hsat étant le champ magnétique de saturation, on obtient la courbe anhystérétique Banh. Cette opération est longue, s'effectue sous une contrainte constante et nécessite de pouvoir soumettre le matériau ferromagnétique à un champ alternatif externe, ce qui implique que le matériau est accessible, et que sa forme et sa position permettent d'installer le système nécessaire à l'obtention du champ alternatif.

Ainsi, un besoin existe d'un procédé simple permettant de suivre en temps réel la contrainte variable subie par une pièce en un matériau présentant de la magnétostriction, par exemple un matériau ferromagnétique ou de déterminer a posteriori la contrainte maximale que la pièce a subie dans son histoire.

### Résumé

Un mode de réalisation de la présente invention prévoit un procédé simple de détection de la contrainte subie par une pièce en un matériau présentant une magnétostriction observable et détectable.

Un mode de réalisation de la présente invention prévoit en outre un procédé simple de détermination a posteriori de la valeur de la contrainte maximale qu'a subie une pièce en un matériau magnétostrictif dans son passé.

Un mode de réalisation de la présente invention prévoit en outre un procédé simple de détection en temps réel du fait que la contrainte subie par une pièce en un matériau magnétostrictif dépasse une valeur de référence.

Un mode de réalisation de la présente invention prévoit en outre un procédé permettant le comptage du nombre de cycles mécaniques subis par une pièce en un matériau magnétostrictif.

Ainsi, un mode de réalisation de la présente invention prévoit un procédé de détection de la contrainte subie par une pièce en un matériau magnétique présentant une magnétostriction détectable, tel qu'un matériau ferromagnétique, comprenant les étapes suivantes :
(a) appliquer une contrainte variable à la pièce ;
(b) réaliser une mesure du champ magnétique au voisinage de la pièce pendant l'application de la contrainte variable à la pièce ; et
(c) comparer ladite mesure à une mesure de référence.

Selon un mode de réalisation de la présente invention, l'étape (b) consiste en une mesure de la courbe du champ magnétique au voisinage de la pièce en fonction d'une contrainte croissante qui lui est appliquée, jusqu'à une contrainte maximale prédéterminée.

Selon un mode de réalisation de la présente invention, l'étape (c) est une étape de détermination de l'allure de ladite courbe en la comparant à des courbes de référence.

Selon un mode de réalisation de la présente invention, les courbes de référence sont des courbes exponentielles ou linéaires.

Selon un mode de réalisation de la présente invention, la pièce en matériau magnétique est réputée avoir été contrainte, dans le passé, à une contrainte maximale supérieure à ladite contrainte maximale prédéterminée si ladite courbe mesurée se rapproche d'une courbe linéaire, est réputée ne pas avoir été contrainte ou avoir vu son passé magnétique effacé par un traitement magnétique si ladite courbe mesurée se rapproche d'une courbe exponentielle et est réputée avoir été contrainte, dans le passé, à une contrainte maximale inférieure à ladite contrainte maximale prédéterminée si la courbe mesurée se rapproche d'une droite puis présente une pente plus forte pour rejoindre une courbe exponentielle.

Selon un mode de réalisation de la présente invention, la contrainte correspondant au passage entre la droite et la pente plus forte de ladite courbe mesurée correspond à la contrainte maximale subie par la pièce dans le passé.

Selon un mode de réalisation de la présente invention, la mesure de l'étape (b) est réalisée sous un champ extérieur différent du champ sous lequel est contrainte la pièce par le passé.

Selon un mode de réalisation de la présente invention, le procédé comprend en outre une étape initiale consistant à appliquer une contrainte initiale maximale à la pièce.

Selon un mode de réalisation de la présente invention, la comparaison à l'étape (c) consiste à déterminer si la valeur absolue du champ magnétique au voisinage de la pièce mesurée à l'étape (b) dépasse un champ magnétique maximal prédéterminé associé à ladite contrainte initiale maximale.

Selon un mode de réalisation de la présente invention, le procédé comprend en outre une étape d'émission d'une alerte si la valeur absolue du champ magnétique au voisinage de la pièce mesurée à l'étape (b) dépasse ledit champ magnétique maximal prédéterminé.

Selon un mode de réalisation de la présente invention, la comparaison à l'étape (c) consiste à déterminer si la valeur absolue du champ magnétique au voisinage de la pièce mesurée à l'étape (b) varie autour d'une valeur prédéterminée, pour déterminer un nombre de cycles mécaniques subis par la pièce.

Selon un mode de réalisation de la présente invention, la comparaison à l'étape (c) est une comparaison entre le champ magnétique mesuré et une courbe déterminée par une étape préalable de caractérisation associant champ magnétique et contrainte.

Selon un mode de réalisation de la présente invention, la mesure du champ magnétique au voisinage de la pièce, par exemple une désaimantation ou une polarisation, est obtenue à l'aide d'un magnétomètre tri-axe.

Selon un mode de réalisation de la présente invention, le procédé comprend en outre une étape préliminaire de traitement magnétique de la pièce pour effacer le passé magnétique de celle-ci.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 illustre un dispositif de test mettant en lumière le principe mis en oeuvre dans les procédés décrits ici ;
les figures 2A à 2C sont des courbes illustrant des résultats obtenus à l'aide du dispositif de test de la figure 1 ;
la figure 3 est un organigramme d'un premier procédé selon un mode de réalisation de la présente invention ;
la figure 4 est un organigramme d'un deuxième procédé selon un mode de réalisation de la présente invention ; et
la figure 5 est un chronogramme illustrant le procédé de la figure 4.

### Description détaillée

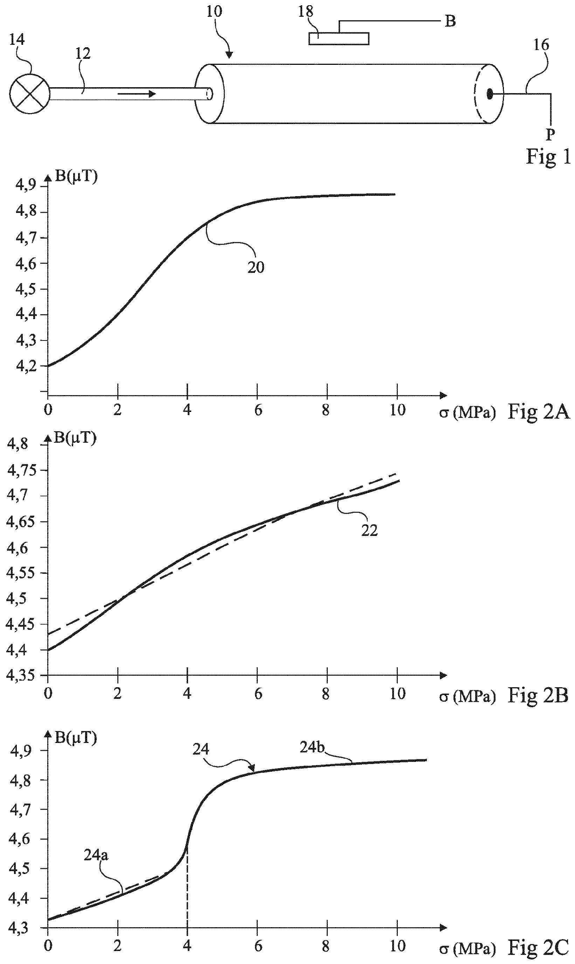

Pour détecter la contrainte subie par une pièce en un matériau magnétique présentant des propriétés de magnétostriction (matériau magnétostrictif), par exemple en un matériau ferromagnétique, a posteriori ou en temps réel, les inventeurs prévoient de tirer profit d'une relation, qu'ils ont mis en valeur lors d'expériences qui seront décrites ci-dessous en relation avec les figures 1 et 2A à 2C, entre le champ magnétique au voisinage de la pièce (lié à l'aimantation de celle-ci) et la contrainte appliquée à la pièce.

On notera que par matériau magnétique présentant des propriétés de magnétostriction, on comprendra tout matériau magnétique présentant de telles propriétés observables et détectables. Dans cette catégorie sont ainsi compris l'ensemble des matériaux ferromagnétiques, et même ceux présentant des coefficients de magnétostriction faibles, notamment le Permalloy (alliage à 80 % de nickel et à 20 % de fer). Ce matériau, présentant des coefficients de magnétostriction très faibles, devrait présenter peu d'effet magnétostrictif. Cependant, ce matériau présente des constantes d'anisotropie encore plus faibles que ses coefficients de magnétostriction, ce qui implique que ce sont quand même les effets magnétostrictifs qui dominent pour ce matériau. Ceci rend l'aimantation de ce matériau très sensible à la moindre contrainte mécanique. On notera cependant que, dans l'objectif de résister à de fortes contraintes, d'autres matériaux magnétostrictifs pourront être préférés au Permalloy.

La figure 1 illustre un dispositif de test comprenant une canalisation 10 en un matériau magnétostrictif, par exemple en acier, fermée à ses deux extrémités. Un fluide est introduit dans la canalisation 10 à l'aide d'un tuyau 12, la quantité de fluide dans la canalisation 10 étant ajustée à l'aide d'une vanne 14. Un capteur de pression 16 mesure la pression dans la canalisation 10. La pression P dans la canalisation correspond à la contrainte appliquée à celle-ci. Un capteur de champ magnétique 18 est placé à l'extérieur de la canalisation et permet la mesure du champ magnétique B en son voisinage.

A l'aide du dispositif de la figure 1, on peut appliquer différentes valeurs de contraintes à la pièce 10 et tracer des courbes du champ magnétique au voisinage de la canalisation en fonction de la contrainte appliquée à celle-ci par le fluide. Les inventeurs ont remarqué que la forme de la courbe du champ magnétique en fonction de la contrainte varie selon le passé du matériau magnétique, et plus particulièrement selon la contrainte mécanique maximale qu'a subie le matériau dans le passé.

Les figures 2A à 2C sont des courbes illustrant des résultats obtenus à l'aide du dispositif de test de la figure 1 dans plusieurs cas.

Dans un premier cas, la canalisation 10 a été préalablement traitée magnétiquement de façon à effacer sa mémoire magnétique. Par exemple, la canalisation a été désaimantée. Ensuite, elle n'a subi aucune contrainte mécanique. Dans l'exemple du dispositif de test de la figure 1, ceci signifie qu'aucun fluide sous pression n'a été introduit dans la canalisation 10 et n'a exercé de contrainte sur les parois de celle-ci depuis son traitement magnétique.

La figure 2A illustre la courbe 20 du champ magnétique B au voisinage de la canalisation lorsqu'on lui applique une contrainte σ croissante. Dans l'exemple représenté, la contrainte σ (pression différentielle entre l'intérieur et l'extérieur de la canalisation) augmente de 0 à 10 MPa. Les inventeurs ont déterminé que, dans ce cas, la courbe 20 obtenue suit une courbe de forme exponentielle.

Dans un deuxième cas, la canalisation 10 a été préalablement traitée magnétiquement de façon à effacer sa mémoire magnétique, par exemple désaimantée, puis on lui a appliqué une contrainte correspondant à une pression supérieure à 10 MPa.

La figure 2B illustre la courbe 22 que l'on obtient ensuite en appliquant une contrainte croissante sur la pièce et en mesurant la valeur du champ magnétique B en fonction de cette contrainte σ. Les inventeurs ont déterminé que, dans ce cas, la courbe obtenue, pour une contrainte σ correspondant à une pression variant entre 0 et 10 MPa, est une courbe linéaire.

Dans un troisième cas, la canalisation 10 a été traitée magnétiquement de façon à effacer sa mémoire magnétique, par exemple désaimantée, puis on lui a appliqué une contrainte correspondant à une pression d'environ 4 MPa.

La figure 2C illustre la courbe 24 obtenue ensuite en appliquant une contrainte croissante sur la pièce et en mesurant le champ magnétique B en fonction de la contrainte σ appliquée, cette contrainte σ variant entre 0 et 10 MPa. Cette courbe comprend deux parties. Une première partie 24a, entre σ = 0 et environ σ = 4 MPa, est sensiblement linéaire. A environ 4 MPa, la pente de la courbe 24 augmente brutalement et rejoint une courbe exponentielle (portion de courbe 24b).

Partant de ces constatations, les inventeurs prévoient divers procédés de surveillance de la contrainte appliquée à une pièce magnétostrictive. Parmi ces procédés, l'un permet de déterminer a posteriori la valeur de la contrainte maximale à laquelle la pièce a été soumise précédemment. Un autre procédé permet de surveiller en temps réel la contrainte variable appliquée à une telle pièce et d'en détecter un dépassement par rapport à un seuil fixé au préalable. Un autre procédé permet un contrôle qualité de pièces sorties d'usine. Un autre procédé permet de compter des cycles mécaniques appliqués à une pièce. Ces divers procédés seront détaillés ci-après.

On notera qu'un traitement magnétique tel qu'une désaimantation d'une pièce en un matériau magnétostrictif annule l'effet et la visibilité des contraintes précédemment subies par la pièce. Ainsi, il est clair que la désaimantation initiale de la pièce prévue dans les procédés décrits ci-après ne devra être faite en pratique que sur des pièces n'ayant encore jamais été contraintes, par exemple sorties d'usine.

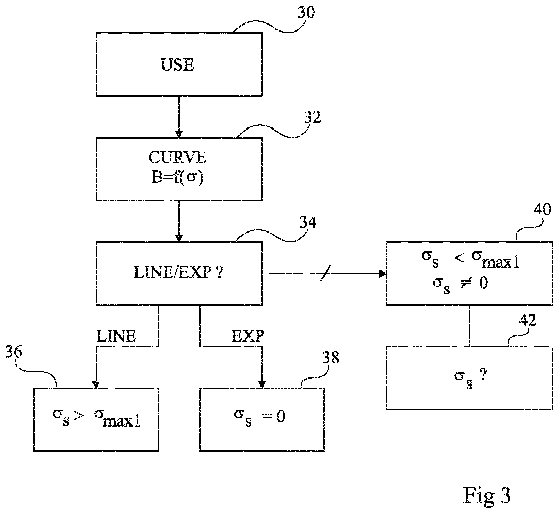

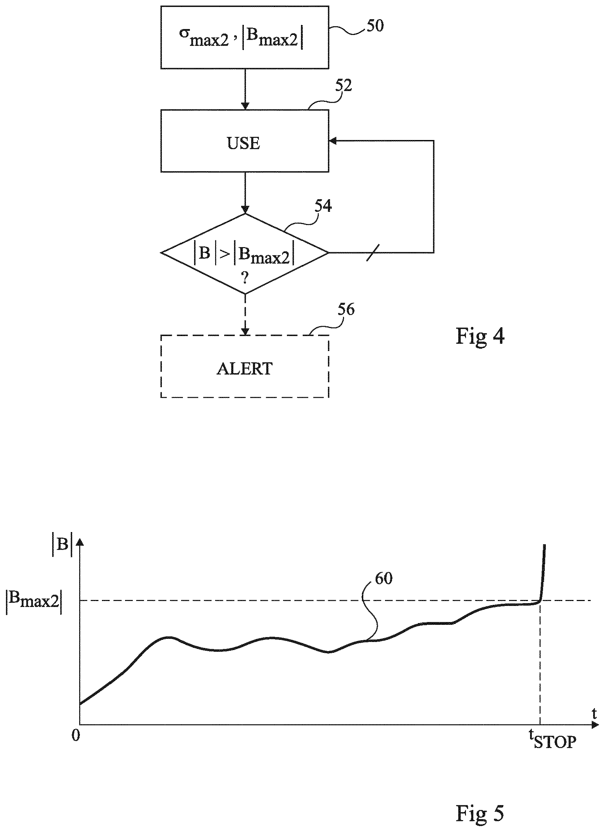

Les figures 3 et 4 sont des organigrammes présentant deux de ces procédés.

Un premier procédé proposé, illustré en figure 3, permet, en tirant profit d'une analyse des différents types de courbes définis ci-dessus, de mesurer la contrainte maximale qu'a subie une pièce magnétostrictive dans le passé. Pour cela, la pièce est initialement traitée magnétiquement de façon à effacer sa mémoire magnétique, par exemple désaimantée, avant d'être utilisée lors d'une étape 30 (USE) pendant laquelle elle est susceptible de subir des contraintes.

Ensuite, à une étape 32, la pièce n'est plus en utilisation et on trace la courbe du champ magnétique au voisinage de la pièce en fonction d'une contrainte σ croissante qu'on lui applique (CURVE B = f(σ)), entre une contrainte nulle et une contrainte maximale σₘₐₓ₁. A titre d'exemple, la contrainte σₘₐₓ₁ pourra être une contrainte prédéterminée que la pièce en utilisation n'est pas censée dépasser. On notera que la mesure de cette courbe pourra être réalisée sur la pièce dans son environnement d'utilisation. On pourra également extraire la pièce de son environnement pour tracer cette courbe. En effet, les inventeurs ont remarqué qu'un changement d'environnement, susceptible d'engendrer un changement du champ magnétique externe, ne modifie pas l'allure générale des courbes des figures 2A à 2C. Notamment, l'augmentation de pente au niveau de la contrainte maximale subie par la pièce dans le passé dans le cas de la courbe de la figure 2C est toujours visible.

Les étapes suivantes sont des étapes de comparaison de l'allure de la courbe obtenue à l'étape 32 à des allures de courbes de référence correspondant aux courbes des figures 2A et 2B. Dans l'exemple représenté, une étape 34 (LINE/EXP ?) consiste à comparer la courbe obtenue à l'étape 32 à des courbes linéaires ou exponentielles.

Dans le cas où la courbe obtenue à l'étape 32 a une allure sensiblement linéaire (LINE), on passe à une étape 36 (σ_{S} > σₘₐₓ₁) dans laquelle on peut affirmer que la contrainte σ_{S} subie par la pièce lors de l'étape 30 d'utilisation a dépassé la valeur σₘₐₓ₁.

Dans le cas où la courbe obtenue à l'étape 32 a une allure exponentielle, on passe à une étape 38 (σ_{S} = 0) dans laquelle on peut affirmer qu'aucune contrainte n'a été appliquée à la pièce lors de l'étape 30 d'utilisation, ou que la pièce a vu son passé magnétique effacé par un traitement magnétique (une désaimantation par exemple).

Si la comparaison de l'étape 34 ne donne pas de résultat, c'est-à-dire si la courbe obtenue à l'étape 32 n'est ni linéaire ni exponentielle, on peut en conclure, à une étape 40 (σ_{S} < σₘₐₓ₁, σ_{S} ≠ 0), que la pièce, lors de l'étape initiale d'utilisation 30, a été soumise à une contrainte dont la valeur n'a pas dépassé la valeur σₘₐₓ₁. La courbe obtenue à l'étape 32 est alors une courbe telle que la courbe de la figure 2C.

Ensuite, une étape optionnelle 42 peut être prévue pour déterminer la valeur de la contrainte maximale qu'a subie la pièce dans le passé. Pour obtenir cette valeur, on détermine, sur la courbe du champ magnétique au voisinage de la pièce en fonction d'une contrainte σ croissante qu'on lui applique, à quel moment apparaît un brusque changement de la pente de la courbe (correspondant au point situé entre les portions 24a et 24b de la courbe de la figure 2C).

On notera que la comparaison de l'étape 34 peut être réalisée en utilisant tout moyen de calcul adapté tel qu'un ordinateur, permettant une comparaison avec des allures de courbe connues. A titre d'exemple, ces comparaisons pourront être réalisées par un ajustement utilisant la méthode des moindres carrés ou par toute autre méthode d'approximation de forme de courbe. L'homme de l'art décidera aisément l'écart type maximal à fixer entre la courbe issue de la mesure et la courbe théorique dont elle se rapproche, pour obtenir une bonne comparaison.

De plus, on notera que les étapes présentées ici ne sont qu'un exemple. Notamment, la détermination de la forme de la courbe obtenue à l'étape 32 pourra être réalisée en une unique étape de comparaison de la courbe obtenue à des courbes telles que les courbes des figures 2A à 2C, pour obtenir de façon automatisée la forme de la courbe et, le cas échéant, la valeur de la contrainte σ_{S} maximale subie par la pièce magnétostrictive.

Le procédé décrit en relation avec la figure 3 permet ainsi de déterminer, a posteriori, la contrainte maximale appliquée à la pièce en matériau magnétostrictif lors de son utilisation. On notera que, si la pièce a subi une contrainte supérieure à σₘₐₓ₁ (étape 36), on pourra compléter la détermination en augmentant la contrainte σ appliquée au-delà de σₘₐₓ₁, pour déterminer une valeur approchée de la contrainte σ_{S} qu'a subie la pièce. La valeur de la contrainte σ_{S} correspondra alors sensiblement au point de forte variation de pente de la courbe, après la zone linéaire (courbe telle que celle de la figure 2C).

Le procédé de la figure 3 est particulièrement adapté à déterminer si la contrainte maximale appliquée à une pièce lors de son utilisation n'a pas été supérieure à une contrainte d'utilisation maximale, par exemple calibrée en sortie d'usine.

L'obtention de la courbe à l'étape 32 pourra être réalisée en plaçant un magnétomètre, de préférence tri-axe, au voisinage de la pièce et en appliquant une contrainte mécanique croissante à la pièce, par exemple une mise en pression ou, dans le cas d'une canalisation, en augmentant la pression dans la canalisation, à l'aide de tout dispositif adapté. Un magnétomètre tri-axe permet de mesurer les trois composantes spatiales du champ magnétique et permet une bonne détection de la forme de la courbe obtenue à l'étape 32. En effet, en fonction du placement du capteur et de la forme de l'objet, les trois composantes du champ magnétique peuvent plus ou moins varier en fonction de la contrainte appliquée. Une détection à l'aide d'un magnétomètre tri-axe permet de s'affranchir de l'orientation du champ magnétique au voisinage de la pièce.

La figure 4 est un organigramme d'un deuxième procédé selon un mode de réalisation de la présente invention dans lequel on cherche à suivre en temps réel la contrainte que subit une pièce, par exemple pour prévenir un utilisateur en cas de dépassement d'une valeur de référence.

Lors d'une étape initiale 50, et après avoir traité la pièce de façon à annuler sa mémoire magnétique, par exemple par désaimantation, on applique à la pièce une contrainte σₘₐₓ₂, formant une contrainte de référence que la pièce ne doit pas dépasser lors d'une utilisation ultérieure. Pour appliquer cette contrainte de façon précise et fixe, en raison des propriétés de reptation des matériaux utilisés, on appliquera de préférence cette contrainte σₘₐₓ₂ en réalisant plusieurs cycles de mise sous contrainte (application d'une contrainte σₘₐₓ₂ puis relâchement de la contrainte). On détermine, par la même occasion, la valeur absolue du champ magnétique |Bₘₐₓ₂| (ou d'une ou de plusieurs composantes du champ magnétique), au voisinage de la pièce, correspondant à cette contrainte σₘₐₓ₂. De préférence, la détermination de σₘₐₓ₂ sera réalisée sous le même champ (au besoin contrôlé par un générateur de champ externe ou par des bobines) que celui sous lequel la mesure sera opérée.

Ensuite, la pièce est utilisée lors d'une étape 52 (USE). Pendant cette utilisation de la pièce, un système de mesure du champ magnétique au voisinage de celle-ci est prévu pour déterminer, à une étape 54, si la valeur absolue de ce champ magnétique |B| dépasse ou non la valeur |Bₘₐₓ₂| . Dans le cas où |B| < |Bₘₐₓ₂|, le système peut continuer de fonctionner (étape 52). On se situe alors, sur une courbe telle que celle illustrée en figure 2C, dans la portion linéaire 24a.

Dans le cas où |B| > |Bₘₐₓ₂|, un dépassement de la contrainte maximale à appliquer à la pièce est détecté. Ceci est lié au changement de pente du champ |B| lorsque la précontrainte σₘₐₓ₂ est atteinte (passage entre les portions 24a et 24b dans la courbe de la figure 2C). On peut alors prévoir d'envoyer un signal d'alerte (étape 56, ALERT) ou de stopper le système.

Le procédé de la figure 4 permet de surveiller en continu la contrainte appliquée à une pièce en un matériau magnétostrictif. On peut par exemple l'appliquer à la surveillance d'une canalisation dans laquelle la pression ne doit pas dépasser un certain seuil. En effet, ce procédé est moins complexe à mettre en oeuvre, puisqu'il n'est pas intrusif, qu'un dispositif interne de surveillance de la pression. On notera que, même si la canalisation à surveiller n'est pas en un matériau magnétostrictif, on pourra tout de même en réaliser la surveillance, par exemple en plaçant, sur le contour de cette canalisation, une bague en un matériau magnétostrictif. La surveillance de la pression dans la canalisation est alors couplée à la surveillance de la contrainte appliquée à la bague en matériau magnétostrictif, par le procédé de la figure 4.

La figure 5 est un chronogramme illustrant un exemple de mise en oeuvre du procédé de la figure 4.

La courbe 60 de la figure 5 représente la valeur absolue du champ magnétique |B| au voisinage de la pièce à surveiller, en fonction du temps. A un instant initial t = 0, la pièce dont on veut surveiller la contrainte est utilisée, après avoir été précontrainte à σₘₐₓ₂. Pendant cette utilisation, la contrainte appliquée à la pièce varie mais reste inférieure à la valeur |Bₘₐₓ₂| associée à la contrainte initiale σₘₐₓ₂ à ne pas dépasser.

A un instant t_{STOP}, la contrainte courante |σ| augmente fortement et dépasse la contrainte |σₘₐₓ₂|. Le champ mesuré augmente alors brutalement, on passe, sur l'organigramme de la figure 4, à l'étape 56 et une alerte est émise. Dans le cas d'une canalisation dont on surveille la pression, ceci peut par exemple engendrer une coupure du flux dans la canalisation pour permettre un remplacement de celle-ci.

Pour réaliser la mesure du champ magnétique au voisinage de la pièce, on pourra utiliser tout dispositif de mesure de champ magnétique connu, et notamment un magnétomètre tri-axe que l'on peut facilement positionner au voisinage de la pièce.

Les inventeurs prévoient également une variante au procédé de la figure 3 permettant de réaliser un contrôle qualité de pièces en sortie d'usine. Pour cela, on détermine une contrainte tolérée σₜₒₗ en sortie d'usine. Une fois la pièce fabriquée, on trace la courbe du champ magnétique au voisinage de la pièce pour une contrainte variant entre 0 et σₜₒₗ. Si la courbe est une droite entre 0 et σₜₒₗ, cela veut dire que la pièce a subi une contrainte supérieure à σₜₒₗ. La pièce est alors éliminée du lot. Si la courbe est une exponentielle, la pièce est acceptée. Si la courbe est une droite suivie d'un changement de pente important, la pièce est également acceptée. On peut également, dans une variante de réalisation, prévoir de rejeter une pièce dont la courbe du champ magnétique est en exponentielle si on a un doute qu'un effacement de la mémoire magnétique, par exemple par désaimantation, a été réalisé sur la pièce (par exemple si on sait que la pièce a forcément été soumise au moins à une faible contrainte).

Une autre application possible du phénomène mis en valeur en relation avec les figures 1 et 2A à 2C réside dans un comptage de cycles mécaniques subis par une pièce, par exemple pour réaliser une étude de fatigue mécanique de la pièce. Pour cela, la pièce est initialement précontrainte à une valeur élevée et on place en son voisinage un capteur de champ magnétique.

Puisque la pièce a été précontrainte à une valeur élevée, le champ magnétique en son voisinage est sensiblement proportionnel à la contrainte appliquée à la pièce (sur une courbe telle que la courbe de la figure 2B). Ainsi, en mesurant le champ magnétique, on peut déterminer la contrainte appliquée à la pièce, et notamment compter les cycles mécaniques appliqués à celle-ci (augmentation puis diminution de la contrainte) en réalisant par exemple une détection des variations du champ autour d'une valeur prédéterminée.

Une autre application possible du phénomène mis en valeur en relation avec les figures 1 et 2A à 2C réside dans la réalisation d'une jauge à distance de la contrainte appliquée à une pièce. Dans ce cas, on applique une précontrainte de valeur élevée à la pièce et on place en son voisinage un capteur de champ magnétique. Puisque l'on se situe dans une région où la courbe du champ magnétique en fonction de la contrainte appliquée à la pièce a pu être établie par une étape préalable de caractérisation (courbe bijective), une variation du champ magnétique peut être corrélée à une variation de la contrainte appliquée à la pièce.

De préférence, pour une meilleure lisibilité dans le cas de ces deux dernières applications, on appliquera la précontrainte initiale sous un champ magnétique différent du champ dans lequel la pièce est utilisée lors du comptage de cycles mécaniques ou lors de la mesure en temps réel de la contrainte.

Ceci peut être utilisé pour connaître l'usure d'une pièce après un certain nombre de cycles mécaniques, que ce soit pour l'étude de la pièce ou pour détecter un remplacement de celle-ci.

Les inventeurs ont noté que si une pièce a subi, dans le passé, une contrainte amenant l'aimantation de la pièce à sa courbe anhystérétique, une courbe du champ magnétique en fonction d'une contrainte croissante tracée par la suite peut manquer de lisibilité. Dans ce cas précis, ce problème est résolu en mesurant la courbe du champ magnétique en fonction de la contrainte appliquée sous un champ extérieur très différent du champ sous lequel la contrainte a été appliquée. Une telle mesure peut être facilement réalisée en amenant, au voisinage de la pièce, des bobines correctement polarisées alimentées par un générateur portatif. On obtient alors des courbes telles que les courbes des figures 2A à 2C.

On notera que les étapes initiales de traitement magnétique visant à effacer la mémoire magnétique de la pièce pourront également être des étapes de polarisation, à savoir des étapes de cyclage en champ magnétique à polarité alternée, pouvant être décroissante et sous un champ non nul.

De plus, de nombreuses autres applications pourront découler de la relation mise en avant par les inventeurs entre le champ magnétique au voisinage d'une pièce en un matériau magnétostrictif et une contrainte appliquée à cette pièce. En particulier, dans le domaine du génie civil, l'utilisation de ce procédé permettrait d'identifier et de quantifier une zone de contrainte anormalement élevée par la mesure du champ magnétique induit par la structure magnétique des tiges de fer utilisées pour le béton armé dans les structures des bâtiments, par exemple dans des piliers. On pourra également prévoir de surveiller par exemple le comportement de pièces magnétiques telles que des plaques ou des tiges filetées. Par exemple, on pourra prévoir de surveiller le comportement d'un train d'atterrissage après un atterrissage difficile (application aéronautique et spatiale).

## Revendications

1. Procédé de détection en temps réel du dépassement d'une contrainte mécanique prédéterminée par la contrainte subie par une pièce (10) en un matériau magnétique présentant une magnétostriction détectable, comprenant les étapes suivantes :
(a) appliquer une contrainte mécanique variable à la pièce ;
(b) réaliser une mesure du champ magnétique (B) au voisinage de la pièce pendant l'application de la contrainte mécanique variable à la pièce ; et
(c) comparer ladite mesure à une mesure de référence, dans lequel :
le procédé comprenant une étape initiale consistant à appliquer ladite contrainte mécanique prédéterminée (σₘₐₓ₂) à la pièce ; et
la comparaison à l'étape (c) consiste à déterminer si la valeur absolue du champ magnétique au voisinage de la pièce (|B|) mesurée à l'étape (b) dépasse un champ magnétique prédéterminé (|Bₘₐₓ₂|) associé à ladite contrainte mécanique prédéterminée (σₘₐₓ₂).

2. Procédé selon la revendication 1, comprenant en outre une étape d'émission d'une alerte si la valeur absolue du champ magnétique au voisinage de la pièce (|B|) mesurée à l'étape (b) dépasse ledit champ magnétique prédéterminé (|Bₘₐₓ₂|).

3. Procédé selon la revendication 1 ou 2, dans lequel l'étape (b) comprend une mesure de la courbe du champ magnétique (B) au voisinage de la pièce en fonction d'une contrainte croissante (σ) qui lui est appliquée, jusqu'à ladite contrainte mécanique prédéterminée (σₘₐₓ₁).

4. Procédé selon la revendication 3, dans lequel l'étape (c) comprend la détermination de l'allure de ladite courbe en la comparant à des courbes de référence.

5. Procédé selon la revendication 4, dans lequel les courbes de référence sont des courbes exponentielles ou linéaires.

6. Procédé selon la revendication 4 ou 5, dans lequel la pièce en matériau magnétique est réputée avoir été contrainte, dans le passé, à une contrainte maximale supérieure à ladite contrainte mécanique prédéterminée (σₘₐₓ₁) si ladite courbe mesurée se rapproche d'une courbe linéaire, est réputée ne pas avoir été contrainte ou avoir vu son passé magnétique effacé par un traitement magnétique si ladite courbe mesurée se rapproche d'une courbe exponentielle et est réputée avoir été contrainte, dans le passé, à une contrainte maximale inférieure à ladite contrainte mécanique prédéterminée si la courbe mesurée se rapproche d'une droite puis présente une pente plus forte pour rejoindre une courbe exponentielle.

7. Procédé selon la revendication 6, dans lequel la valeur de contrainte maximale subie par la pièce dans le passé correspond à la valeur de contrainte relative au brusque changement de pente de ladite courbe mesurée.

8. Procédé selon l'une quelconque des revendications 1 à 7, dans lequel la mesure de l'étape (b) est réalisée sous un champ extérieur différent du champ sous lequel est contrainte la pièce par le passé.

9. Procédé selon l'une quelconque des revendications 1 à 8, dans lequel la mesure du champ magnétique au voisinage de la pièce est obtenue à l'aide d'un magnétomètre tri-axe.

10. Procédé selon l'une quelconque des revendications 1 à 9, comprenant en outre une étape préliminaire de traitement magnétique de la pièce, par exemple une désaimantation ou une polarisation, pour effacer la mémoire magnétique des contraintes précédemment subies par la pièce.
